# EUROPEAN PATENT APPLICATION

(11) **EP 4 559 787 A1**
(43) Date of publication of application: **28.05.2025**
(21) Application number: 24207439.1
(22) Date of filing: 18.10.2024
(51) Int. Cl.: B62D 25/20, B60K 1/04

(54) **VEHICLE BODY LOWER STRUCTURE FOR ELECTRIC VEHICLE**

(30) Priority: 27.11.2023 JP 2023199897
(71) Applicant: Suzuki Motor Corporation, Shizuoka 432-8611 (JP)
(72) Inventor: HIRATA, Takuya, Hamamatsu-shi, 432-8611 (JP)
(74) Representative: Plasseraud IP

(57) **Abstract**

[Problem to be Solved]

To ensure the stiffness of a floor panel against a load in the up-down direction in an electric vehicle provided with a step at a floor panel.

[Solution]

A rear floor panel 10 of an electric vehicle includes a tilted part 16 that is tilted to the upper side while extending from a rear end of a planar part 12 toward a rear side, a floor cross member 20 is disposed at a front part of the tilted part 16 on the upper surface side of the rear floor panel 10, and an underfloor reinforcement 30 is disposed at the front part of the tilted part 16 on the lower surface side of the rear floor panel 10. A front end of the underfloor reinforcement 30 is disposed on the front side relative to a front end of the tilted part 16, a rear end of the underfloor reinforcement 30 is disposed at the tilted part 16, and the underfloor reinforcement 30 and the floor cross member 20 are joined with the rear floor panel 10 sandwiched therebetween.

## Description

### [Technical Field]

The present invention relates to a vehicle body lower structure for an electric vehicle.

### [Background Art]

Typically, in a vehicle including an internal combustion engine, a fuel tank is disposed on the lower side relative to a floor part of the vehicle. For example, in order to reserve a space in which the fuel tank is disposed, a structure is known in which, as for the position of the floor part in the vehicle up-down direction, the rear part of the floor part is disposed on the upper side relative to the front part as disclosed in Patent Literature 1. Rear part seats are installed at the rear part of the floor part.

Since such a stepped part is provided between the front and rear parts of the floor part, a space in which the fuel tank or the like is disposed can be reserved on the lower side relative to a floor panel positioned at the rear part of the floor part. Furthermore, a wall part extending in the vehicle width direction and constituting the stepped part is formed at the floor part so that the stiffness of the floor part can be ensured.

In addition, an electric vehicle includes a battery pack configured to supply electric power to an electric motor. Even in a structure including the stepped part at the floor part as in the above-described example, the battery pack is typically disposed on the lower side relative to the floor panel.

### [Citation List]

### [Patent Literature]

[Patent Literature 1] JP 2020-138631 A

### [Summary of Invention]

### [Problem to be Solved by the Invention]

As described above, the battery pack is disposed on the lower side relative to the floor panel in the electric vehicle, and thus a space for installing the battery pack needs to be reserved on the lower side relative to the floor panel. In a case in which a structure including a floor panel provided with the stepped part as in the above-described example is applied to the electric vehicle, the battery pack needs to be disposed on the lower side relative to the floor panel positioned at the front part of the floor part.

In this case, the position of the front part of the floor part is disposed higher than the structure of the above-described example. Accordingly, the positional difference between the front and rear parts of the floor part in the vehicle up-down direction decreases as compared to the structure of the above-described example. This leaves room for improvement in ensuring the stiffness of the floor part.

The present invention has been made to solve the above-described problem and an object of the present invention is to provide a vehicle body lower structure of an electric vehicle capable of ensuring the stiffness of a floor panel against a load in the up-down direction in an electric vehicle provided with a step at the floor panel.

### [Means for Solving the Problem]

In a vehicle body lower structure of an electric vehicle according to the present invention for achieving the above-described object, a battery pack is disposed on a lower surface side of a floor panel, and the floor panel is provided with a step across which a rear part is positioned higher than a front part. In the vehicle body lower structure of the electric vehicle, the floor panel includes a planar part and a tilted part that is tilted to a vehicle upper side while extending from a rear end of the planar part toward a vehicle rear side, a cross member extending in a vehicle width direction is disposed at a front part of the tilted part on an upper surface side of the floor panel, an underfloor reinforcement is disposed at the front part of the tilted part on a lower surface side of the floor panel, a front end of the underfloor reinforcement is disposed on a vehicle front side relative to a front end of the tilted part, a rear end of the underfloor reinforcement is disposed at the tilted part, and the underfloor reinforcement and the cross member are joined to the floor panel with the floor panel sandwiched between the underfloor reinforcement and the cross member.

### [Advantageous Effect of Invention]

According to the present invention, it is possible to ensure the stiffness of a floor panel against a load in the up-down direction in an electric vehicle provided with a step at the floor panel.

### [Brief Description of Drawings]

[Figure 1] Figure 1 is a perspective view illustrating an embodiment of a vehicle body lower structure of an electric vehicle according to the present invention.
[Figure 2] Figure 2 is a perspective view illustrating a state in which a rear seat in Figure 1 is removed.
[Figure 3] Figure 3 is a top view of Figure 2.
[Figure 4] Figure 4 is a bottom view of Figure 2.
[Figure 5] Figure 5 is a schematic cross-sectional view in the direction of arrow A-A in Figure 1.
[Figure 6] Figure 6 is an enlarged cross-sectional view of Figure 5.
[Figure 7] Figure 7 is a schematic cross-sectional view in the direction of arrow B-B in Figure 3.
[Figure 8] Figure 8 is a schematic cross-sectional view in the direction of arrow C-C in Figure 3.

### [Mode for Carrying Out the Invention]

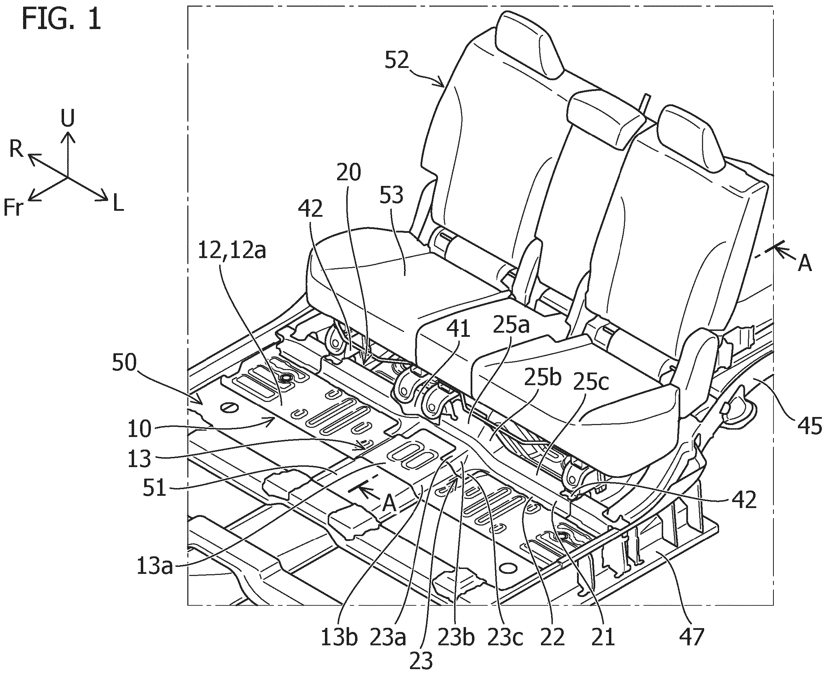

An embodiment of a vehicle body lower structure of an electric vehicle according to the present invention will be described below with reference to the drawings (Figures 1 to 8). Note that, in the drawings, an arrow Fr direction indicates the front side in the vehicle front-rear direction. In description of the embodiment, "a front part (front end) and a rear part (rear end)" correspond to a front part and a rear part in the vehicle front-rear direction. In addition, an arrow R and an arrow L indicate the right side and the left side when the vehicle front side is viewed by a passenger. In addition, an arrow U indicates the upper side in the vehicle up-down direction.

As illustrated in Figures 1 to 4, the vehicle body lower structure of the electric vehicle of the present embodiment includes a front floor panel 50, a rear floor panel 10 (floor panel), a floor cross member 20 (cross member), and an underfloor reinforcement 30. In addition, for example, a side sill 47 and a rear side member 45 are provided at the vehicle body lower structure.

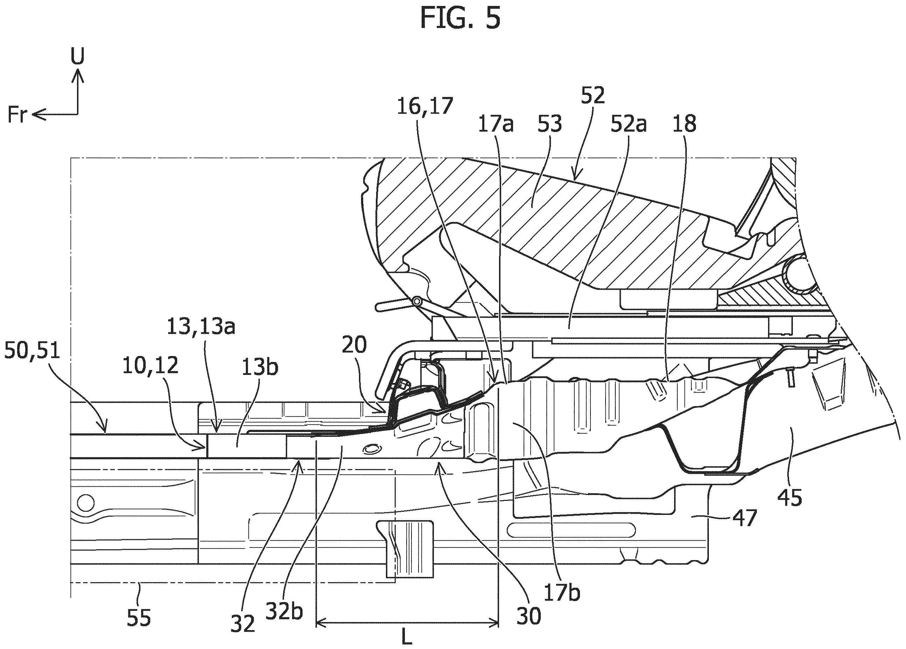

In the vehicle body lower structure of the present embodiment, a battery pack 55 is disposed on the lower surface side of the rear floor panel 10. The rear floor panel 10 is provided with a step across which a rear part is positioned higher than a front part (Figure 5). The rear floor panel 10 may also include a front planar part 12 (planar part), and a tilted part 16 that is tilted to the vehicle upper side while extending from a rear end of the front planar part 12 toward the vehicle rear side. The floor cross member 20 extends in a vehicle width direction and is disposed at a front part of the tilted part 16 on the upper surface side of the rear floor panel 10, and the underfloor reinforcement 30 is disposed at the front part of the tilted part 16 on the lower surface side of the rear floor panel 10.

A front end of the underfloor reinforcement 30 is disposed on the vehicle front side relative to a front end of the tilted part 16, a rear end of the underfloor reinforcement 30 is disposed at the tilted part 16, and the underfloor reinforcement 30 and the floor cross member 20 are joined with the rear floor panel 10 sandwiched therebetween.

Each member included in the vehicle body lower structure of the present embodiment will be described below.

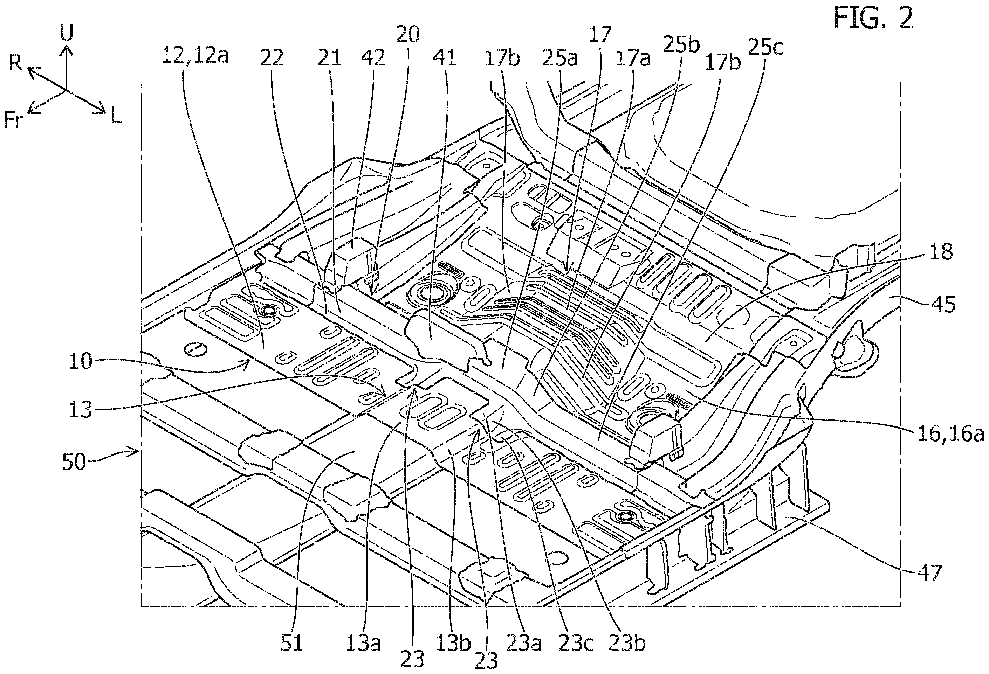

A floor part of the electric vehicle of the present embodiment includes the front floor panel 50 and the rear floor panel 10 disposed in the vehicle front-rear direction. The front floor panel 50 is disposed, for example, on the lower side relative to a driver seat on the vehicle front side relative to the rear floor panel 10. As illustrated in Figures 1 and 2, the rear floor panel 10 is disposed on the vehicle rear side relative to the front floor panel 50, and a front part of the rear floor panel 10 is joined to a rear part of the front floor panel 50 by spotwelding, for example. As illustrated in Figure 1, the rear floor panel 10 of the present embodiment is disposed on the lower side relative to a rear seat 52.

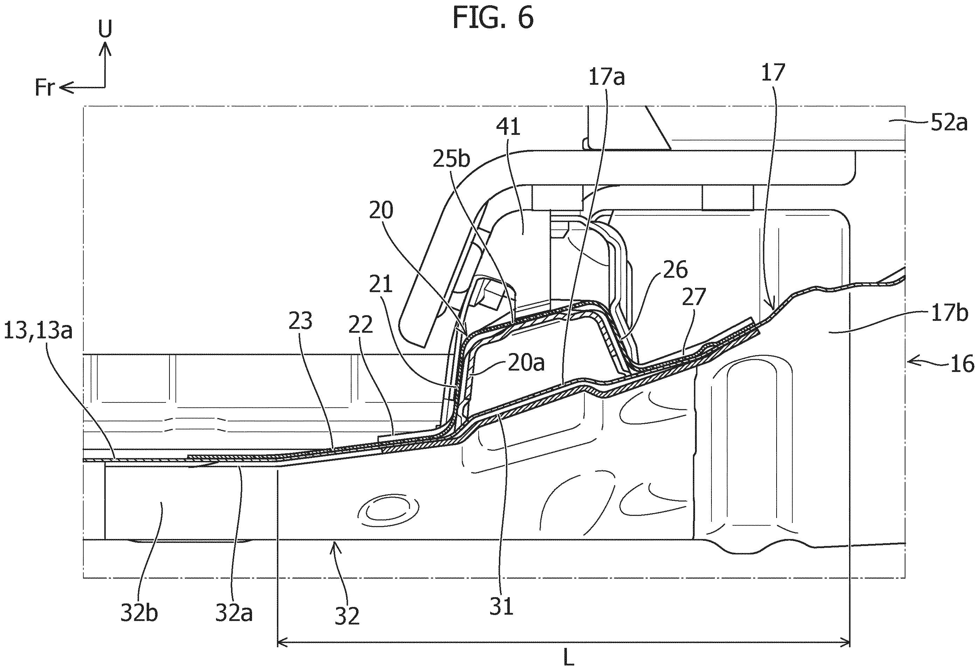

As illustrated in Figures 2 and 5, the front and rear parts of the rear floor panel 10 are arranged at different positions relative to each other in the vehicle up-down direction. In this example, the front planar part 12 and a rear planar part 18 positioned on the rear side relative to the front planar part 12 are provided. The rear planar part 18 is positioned higher than the front planar part 12. The tilted part 16 is tilted to the vehicle upper side while extending toward the vehicle rear side to connect the rear end of the front planar part 12 and a front end of the rear planar part 18. The range of the tilted part 16 in the vehicle front-rear direction is set to a range denoted by L in Figures 5 and 6. In addition, tunneling parts 13 and 17 are provided at the floor panel of the present embodiment as illustrated in Figure 2.

The front planar part 12 is a planar part positioned at the front part of the rear floor panel 10. In the present embodiment, the front planar part 12 includes a footrest space for a passenger seated on the rear seat 52. The side sill 47 extending in the vehicle front-rear direction is joined on the lower surface side relative to an outer part of the front planar part 12 in the vehicle width direction. The side sill 47 of the present embodiment is a member having high stiffness and constituting a vehicle chassis and is formed of a metallic material. Parts of the tunneling parts 13 and 17 are disposed at a middle part of the front planar part 12 in the vehicle width direction. The tunneling parts 13 and 17 will be described later.

As illustrated in Figure 5, the rear planar part 18 is a part positioned on the rear side relative to the front planar part 12 and disposed on the vehicle upper side relative to the front planar part 12. The rear planar part 18 is disposed on the lower side relative to a cushion part 53 of the rear seat 52. An outer part of the rear planar part 18 in the vehicle width direction may be joined to, for example, the rear side member 45 or the like extending in the vehicle front-rear direction. Similarly to the side sill 47, the rear side member 45 is a member having high stiffness and constituting the vehicle chassis and is formed of a metallic material. In this example, the rear side member 45 may be joined to a rear part of the side sill 47 through a bracket or the like.

The tilted part 16 will be described next. As illustrated in Figures 2, 3, 5, and 6, the tilted part 16 is a part connecting the front planar part 12 and the rear planar part 18 and extends from the rear end of the front planar part 12 to the front end of the rear planar part 18. The tilted part 16 is tilted to the vehicle upper side while extending from a rear part of the front planar part 12 toward the vehicle rear side and is connected to the front end of the rear planar part 18. A rear part of the tilted part 16 is joined to, for example, the rear part of the side sill 47. In the present embodiment, the rear planar part 18, the front planar part 12, and the tilted part 16 are integrally formed. Specifically, these parts are formed of one plate. Note that the rear planar part 18, the front planar part 12, and the tilted part 16 may be formed of different members and joined by spotwelding or the like to constitute one rear floor panel 10.

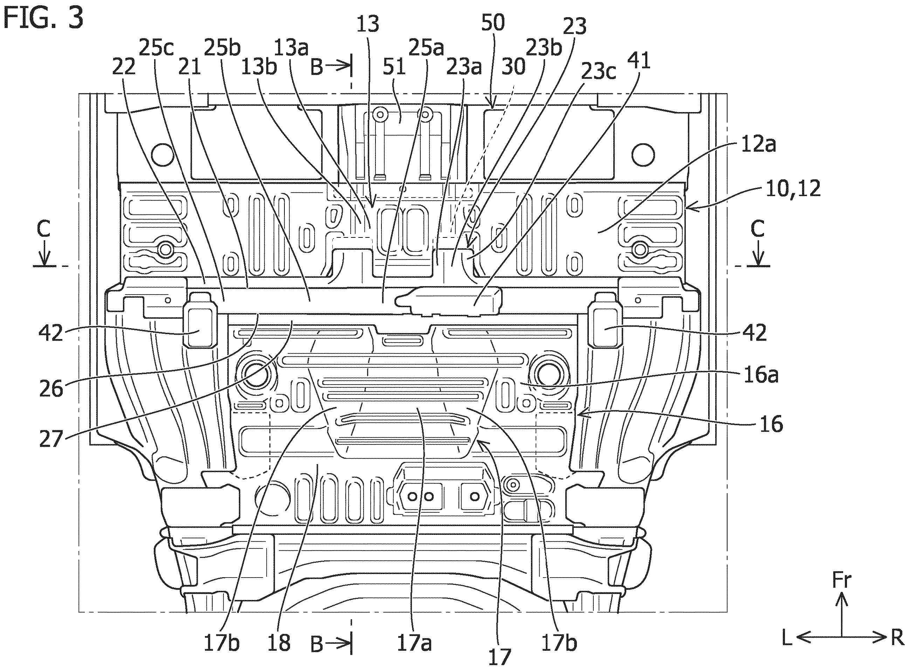

The tunneling parts 13 and 17 of the rear floor panel 10 will be described below. As illustrated in Figures 2 and 3, the tunneling parts 13 and 17 are provided at a middle part of the rear floor panel 10 in the vehicle width direction, bulges toward the vehicle upper side, and extends in the vehicle front-rear direction. The tunneling parts 13 and 17 include top parts 13a and 17a positioned higher than upper surfaces 12a and 16a (principal surfaces) of the rear floor panel 10, and sidewall parts 13b and 17b extending from the upper surfaces 12a and 16a toward the top parts 13a and 17a. Details of the tunneling parts 13 and 17 will be described below.

As illustrated in Figures 2 and 3, the tunneling parts 13 and 17 of the present embodiment are provided at the front planar part 12 and the tilted part 16 of the rear floor panel 10. The tunneling parts 13 and 17 include a front tunneling part 13 provided at the front planar part 12, and a tilted tunneling part 17 provided at the tilted part 16, and these parts are provided to be integrally continuous.

The front tunneling part 13 is provided at the middle part of the front planar part 12 in the vehicle width direction, bulges toward the vehicle upper side, and extends in the vehicle front-rear direction. In this example, the front tunneling part 13 is provided substantially at the center of the front planar part 12 in the vehicle width direction. Note that the front tunneling part 13 is connected to a tunneling part 51 provided at the front floor panel 50. The front tunneling part 13 includes the front top part 13a and the front sidewall part 13b. The front top part 13a is positioned on the vehicle upper side relative to the upper surface 12a of the front planar part 12 positioned outside the front tunneling part 13 in the vehicle width direction. The front sidewall part 13b is tilted to the upper side while extending from the upper surface 12a toward the inner side in the vehicle width direction. An upper end of the front sidewall part 13b is connected to an outer end of the front top part 13a in the vehicle width direction.

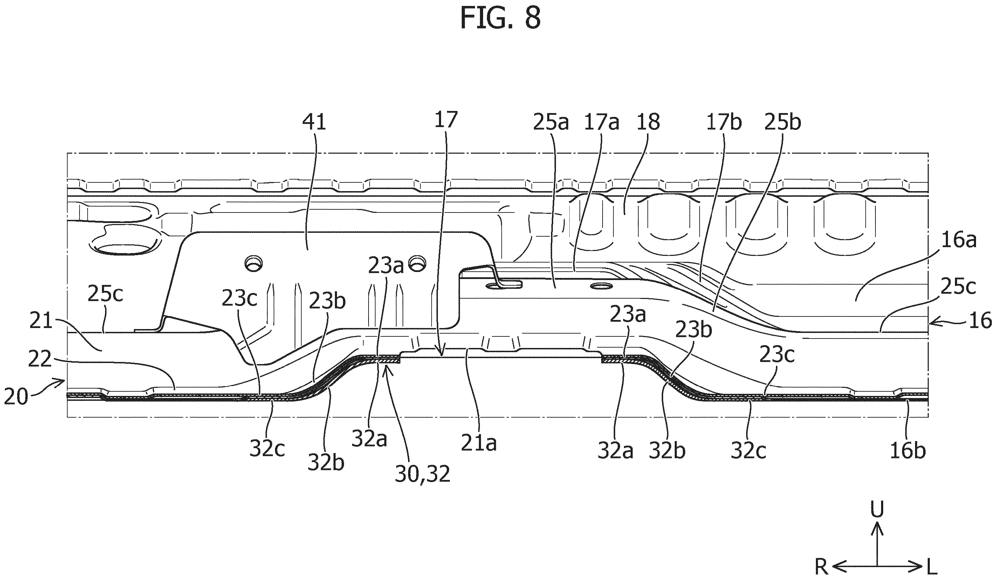

As illustrated in Figures 2 and 3, the tilted tunneling part 17 is provided at a middle part (in this example, a substantially central part) of the tilted part 16 in the vehicle width direction, bulges toward the vehicle upper side, and extends in the vehicle front-rear direction. The tilted tunneling part 17 includes the tilted top part 17a and the tilted sidewall part 17b. The tilted top part 17a is positioned on the vehicle upper side relative to an upper surface of the tilted part 16 positioned outside the tilted tunneling part 17 in the vehicle width direction. The length of the tilted top part 17a in the vehicle width direction increases toward the vehicle rear side. In this example, outer ends of the tilted top part 17a on the respective sides in the vehicle width direction extend apart from each other toward the vehicle rear side. A front end of the tilted top part 17a is connected to a rear end of the front top part 13a. Note that the tilted top part 17a is disposed on the vehicle lower side relative to the rear planar part 18 positioned at a rear end of the rear floor panel 10 as illustrated in Figure 8.

The tilted sidewall part 17b is tilted to the upper side from a side part of the tilted part 16 toward the inner side in the vehicle width direction. An upper end of the tilted sidewall part 17b is connected to an outer end of the tilted top part 17a in the vehicle width direction. A lower end of the tilted sidewall part 17b is tilted in a tilt direction of the tilted part 16 and also tilted inward in the vehicle width direction while extending toward the vehicle rear side. A front end of the tilted sidewall part 17b is connected to a rear end of the front sidewall part 13b.

As illustrated in Figures 2 and 3, the floor cross member 20 is a member joined to an upper surface of the rear floor panel 10 and extends in the vehicle width direction from one end of the rear floor panel 10 in the vehicle width direction to the other end. The floor cross member 20 is a member having high stiffness and constituting the vehicle chassis, and is formed of a metallic material. The floor cross member 20 is joined to the rear floor panel 10 to increase the stiffness of the floor part of the electric vehicle. An outer part of the floor cross member 20 in the vehicle width direction is joined to the side sill 47. The floor cross member 20 of the present embodiment is disposed over a tunneling part (in this example, the tilted tunneling part 17) from above.

As illustrated in Figures 2, 3, and 6, the floor cross member 20 includes a front wall part 21, upper surface parts 25a, 25b, and 25c, and a rear wall part 26. The front wall part 21 is a part protruding upward from a front part of the upper surface 16a of the tilted part 16 of the rear floor panel 10 and extending in the vehicle width direction. The front wall part 21 has a front wall surface formed facing the vehicle front side. A lower end of the front wall part 21 is formed along the shape of the front part of the upper surface 16a of the tilted part 16. Specifically, a middle part of the lower end of the front wall part 21 in the vehicle width direction includes a recessed part 21a cut out in a substantially trapezoid shape in accordance with the shape of the tilted tunneling part 17 provided at the tilted part 16.

As illustrated in Figures 5 and 6, the rear wall part 26 is a wall part disposed with an interval on the vehicle rear side relative to the front wall part 21, protruding upward from the upper surface 16a of the tilted part 16, and extends in the vehicle width direction. The rear wall part 26 has a wall surface facing the vehicle rear side. Similarly to the lower end of the front wall part 21, a lower end of the rear wall part 26 is formed along the upper surface of the rear floor panel 10. Specifically, a middle part of the lower end of the rear wall part 26 in the vehicle width direction is cut out in a substantially trapezoid shape in accordance with the shape of the tilted tunneling part 17.

As illustrated in Figures 2 and 6, the upper surface parts 25a, 25b, and 25c face the vehicle upper side and extend in the vehicle width direction. The upper surface parts 25a, 25b, and 25c are tilted to the vehicle upper side while extending from an upper end of the front wall part 21 toward the vehicle rear side and connected to an upper end of the rear wall part 26. A middle part of the floor cross member 20 of the present embodiment in the vehicle width direction protrudes along the shape of the tilted tunneling part 17. Specifically, the central upper surface part 25a positioned on the upper side relative to the tilted tunneling part 17 is disposed higher than the outer upper surface part 25b positioned outside the tilted tunneling part 17 in the vehicle width direction. The tilted upper surface part 25c that is tilted to the vehicle lower side while extending toward the outside in the vehicle width direction is provided between the central upper surface part 25a and the outer upper surface part 25b.

An inner reinforcement 20a is disposed inside the floor cross member 20. The inner reinforcement 20a is joined to the back sides of the front wall part 21, the rear wall part 26, and the like by spotwelding, for example.

As illustrated in Figures 5 and 6, the floor cross member 20 also includes a front flange part 22 and a rear flange part 27. The front flange part 22 protrudes from the lower end of the front wall part 21 toward the vehicle front side and extends along the shape of the lower end of the front wall part 21. The front flange part 22 is joined to the front part of the tilted part 16 of the rear floor panel 10 by spotwelding, for example. The rear flange part 27 protrudes from the lower end of the rear wall part 26 toward the vehicle rear side and extends along the shape of the lower end of the rear wall part 26. The rear flange part 27 is joined to the tilted part 16 positioned on the rear side relative to the front flange part 22 by spotwelding, for example.

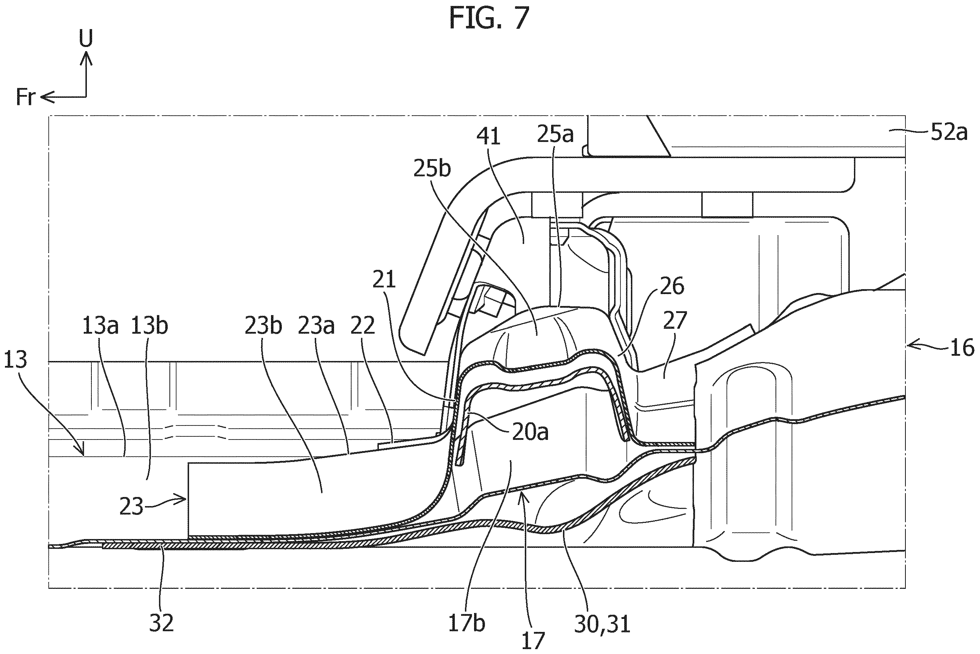

As illustrated in Figures 2 and 3, the floor cross member 20 of the present embodiment also includes an extension part 23 extending from a front end of the middle part of the floor cross member 20 in the vehicle width direction toward the vehicle front side. As illustrated in Figures 6 and 7, at least part of the extension part 23 and at least part of the underfloor reinforcement 30 are disposed overlapping in the vehicle up-down direction.

As illustrated in Figures 2 and 3, the floor cross member 20 of the present embodiment includes two extension parts 23. The two extension parts 23 are disposed apart from each other in the vehicle width direction, and each extension part 23 protrudes from a front end of the front flange part 22 of the floor cross member 20 toward the vehicle front side. A front end of each extension part 23 is disposed at the rear part of the front planar part 12 on the front side relative to the front end of the tilted part 16. In this example, each extension part 23 is disposed on the vehicle front side relative to an outer part of the substantially trapezoidal recessed part 21a of the front wall part 21 in the vehicle width direction.

The extension parts 23 are disposed covering the sidewall parts 13b and 17b of the tunneling parts 13 and 17 from above. As illustrated in Figures 2 and 3, each extension part 23 of the present embodiment includes an inner part 23a, a middle part 23b, and an outer part 23c. The inner part 23a of each extension part 23 is a part positioned at an inner part of the extension part 23 in the vehicle width direction and extends in the vehicle front-rear direction. As illustrated in Figures 2, 6, and 7, the inner part 23a of each extension part 23 covers outer parts of the tilted top part 17a of the tilted tunneling part 17 and the front top part 13a of the front tunneling part 13 in the vehicle width direction from above and may be joined to the tilted top part 17a and the front top part 13a by spotwelding, for example.

The middle part 23b of each extension part 23 is tilted to the vehicle lower side while extending from an outer end of the inner part 23a in the vehicle width direction toward the outside in the vehicle width direction and extends in the vehicle front-rear direction. The middle part 23b is aligned with a tilt direction of the tilted sidewall part 17b and the front sidewall part 13b, covers the tilted sidewall part 17b and the front sidewall part 13b from above in a direction orthogonal to the tilt direction of the tilted sidewall part 17b and the front sidewall part 13b, and is joined to the tilted sidewall part 17b and the front sidewall part 13b by spotwelding, for example.

The outer part 23c of each extension part 23 protrudes toward the outside in the vehicle width direction from an outer end of the middle part 23b in the vehicle width direction and extends in the vehicle front-rear direction. The outer part 23c covers, from above, the upper surface 16a of the tilted part 16 positioned outside the lower end of the tilted sidewall part 17b, and the upper surface 12a of the front planar part 12 positioned outside a lower end of the front sidewall part 13b and is joined to the upper surfaces 12a and 16a by spotwelding, for example.

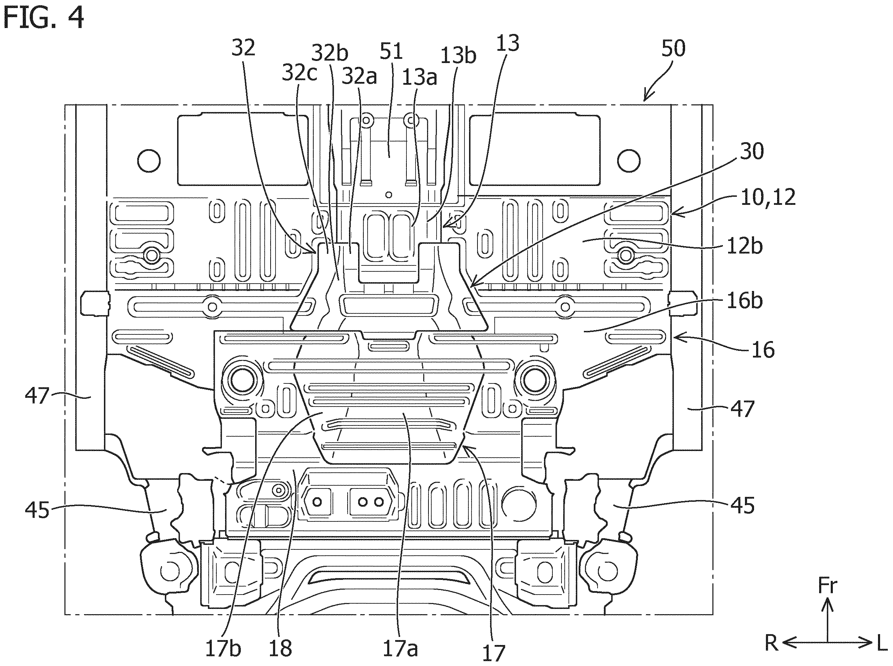

The underfloor reinforcement 30 will be described next. As illustrated in Figure 4, the underfloor reinforcement 30 is a member joined on the lower surface side of the rear floor panel 10 and formed of a metallic material. The underfloor reinforcement 30 is a member extending in the vehicle width direction and disposed at a middle part of the front part of the tilted part 16 in the vehicle width direction. The underfloor reinforcement 30 is joined to the rear floor panel 10 to ensure the stiffness of the floor part of the electric vehicle. The configuration of the underfloor reinforcement 30 will be described below.

As illustrated in Figure 4, the underfloor reinforcement 30 includes a body part 31 extending in the vehicle width direction and two front protrusion parts 32 protruding from a front part of the body part 31 toward the front side. A rear end of the body part 31 extends straight in the vehicle width direction. Side ends of the body part 31 is tilted to the outside in the vehicle width direction while extending toward the vehicle rear side. The front protrusion parts 32 protrude toward the vehicle front side from side parts of the front part of the body part 31 in the vehicle width direction.

As illustrated in Figures 6 and 7, front ends of the front protrusion parts 32 are disposed at the rear part of the front planar part 12 on the front side relative to the front end of the tilted part 16. In the present embodiment, the front ends of the front protrusion parts 32 are disposed on a lower surface 12b of the front planar part 12 positioned on the vehicle front side relative to the front ends of the extension parts 23. The two front protrusion parts 32 are disposed apart from each other in the vehicle width direction. A front end of the body part 31 positioned between the two front protrusion parts 32 extends straight in the vehicle width direction.

The body part 31 is disposed on the lower side relative to the floor cross member 20. Specifically, the body part 31 and the floor cross member 20 are disposed with the front part of the tilted part 16 sandwiched therebetween. The body part 31 is joined to a lower surface 16b of the tilted part 16 by spotwelding, for example. For example, the body part 31 of the underfloor reinforcement 30, the tilted part 16 of the rear floor panel 10, and the rear flange part 27 of the floor cross member 20 as illustrated in Figures 5 and 6 are joined in a three-layer stacked configuration by spotwelding, for example.

The front protrusion parts 32 are disposed covering the sidewall parts 13b and 17b of the tunneling parts 13 and 17 from below. As illustrated in Figures 4 and 6, similarly to the extension parts 23, the front protrusion parts 32 of the present embodiment each include an inner part 32a, a middle part 32b, and an outer part 32c.

The inner part 32a of each front protrusion part 32 is a part positioned at an inner part of the front protrusion part 32 in the vehicle width direction and extends in the vehicle front-rear direction. The inner parts 32a of the front protrusion parts 32 cover the outer parts of the tilted top part 17a of the tilted tunneling part 17 and the front top part 13a of the front tunneling part 13 in the vehicle width direction from below and are joined to the tilted top part 17a and the front top part 13a by spotwelding, for example. For example, the inner part 32a of each front protrusion part 32, the tilted top part 17a of the tilted tunneling part 17, and the inner part 23a of the corresponding extension part 23 may be joined in a three-layer stacked configuration by spotwelding.

The middle part 32b of each front protrusion part 32 is tilted to the vehicle lower side while extending from an outer end of the inner part 32a in the vehicle width direction toward the outside in the vehicle width direction and extends in the vehicle front-rear direction. The middle part 32b of each front protrusion part 32 is aligned with the tilt direction of the tilted sidewall part 17b and the front sidewall part 13b, covers the tilted sidewall part 17b and the front sidewall part 13b from below in the direction orthogonal to the tilt direction of the tilted sidewall part 17b and the front sidewall part 13b, and is joined to the tilted sidewall part 17b and the front sidewall part 13b by spotwelding, for example. For example, the middle part 32b of each front protrusion part 32, the tilted sidewall part 17b of the tilted tunneling part 17, and the middle part 23b of the corresponding extension part 23 may be joined in a three-layer stacked configuration by spotwelding.

The outer part 32c of each front protrusion part 32 protrudes toward the outside in the vehicle width direction from an outer end of the middle part 32b in the vehicle width direction and extends in the vehicle front-rear direction. The outer part 32c of each front protrusion part 32 covers, from below, the lower surface 16b of the tilted part 16 positioned outside the lower end of the tilted sidewall part 17b and the lower surface 12b of the front planar part 12 positioned outside the lower end of the front sidewall part 13b and is joined to the lower surfaces 12b and 16b by spotwelding, for example. For example, the outer part 32c of each front protrusion part 32, the lower surface 16b positioned outside the lower end of the tilted sidewall part 17b of the tilted tunneling part 17, and the outer part 23c of the corresponding extension part 23 may be joined in a three-layer stacked configuration by spotwelding.

In the present embodiment, the underfloor reinforcement 30 and the floor cross member 20 are joined to the rear floor panel 10 with the tilted part 16 of the rear floor panel 10 sandwiched therebetween. With this configuration, the front part of the tilted part 16 of the rear floor panel 10 is effectively reinforced and stress concentration on the tilted part 16 can be reduced when the tilted part 16 deforms as, for example, a load in the up-down direction acts on the front part of the tilted part 16. Thus, it is possible to ensure the stiffness of the rear floor panel 10 against a load in the up-down direction in the electric vehicle provided with a step at the rear floor panel 10.

Although detailed description is omitted, the battery pack 55 that is a heavy object is attached to a lower surface of the floor panel through an attachment member, not shown, such as a bracket as illustrated in phantom line??? in Figure 5. A rear end of the battery pack 55 is disposed, for example, slightly on the rear side relative to the tilted part 16 of the rear floor panel 10 in some cases. In such a case, when an impact load acts on a front part of the vehicle body from the front side toward the rear side, a load toward the rear side acts on the tilted part 16 as well because of the inertia of the battery pack 55.

In the present embodiment, since the tilted part 16 is effectively reinforced as described above, a load acting on the tilted part 16 can be transferred to members constituting the vehicle chassis, such as the floor cross member 20, the side sill 47, and the rear side member 45. Accordingly, stress concentration on the tilted part 16 can be effectively reduced.

In the present embodiment, at least part of each extension part 23 and at least part of the underfloor reinforcement 30 are disposed overlapping in the vehicle the up-down direction as described above. Specifically, each front protrusion part 32 and the corresponding extension part 23 are disposed overlapping through the sidewall parts 13b and 17b of the front tunneling parts 13 and 17 and the like. Accordingly, the center of the vehicle floor part in which the tunneling parts 13, 17, and 51 are positioned can be effectively reinforced. For example, a bent part as the boundary between the front sidewall part 13b of the front tunneling part 13 and the upper surface 12 of the rear floor panel 10 can be reinforced, and accordingly, deformation that occurs when a load acts can be reduced. Furthermore, since the step formed of the tunneling parts 13 and 17 is reinforced, stress concentration on the step, which occurs due to deformation of the step can be effectively reduced.

As described above, each extension part 23, the front sidewall part 13b, and the corresponding front protrusion part 32 are joined in a three-layer stacked configuration and thus form a part in which strength and stiffness are high. In the present embodiment, the front end of the underfloor reinforcement 30 is disposed on the vehicle front side relative to the front end of each extension part 23 of the floor cross member 20. In this example, the front end of each front protrusion part 32 is disposed on the vehicle front side relative to the front end of the corresponding extension part 23 (Figure 7).

Accordingly, generation of abrupt strength difference between a reinforced part and a non-reinforced part can be reduced. For example, a two-layer stacked part is disposed on the front side relative to a three-layer stacked part. With this configuration, reinforcement effect gradually increases toward the rear side in the present embodiment. As a result, extreme strength difference is not generated so that stress concentration can be reduced.

In addition, in the present embodiment, seat brackets 41 and 42 supporting a front part of a seat rail 52a of a vehicle seat (in this example, the rear seat 52) are attached to the floor cross member 20 as illustrated in Figures 2 and 6, the seat brackets 41 and 42 are disposed alongside the extension parts 23 in the vehicle front-rear direction.

As illustrated in Figures 2 and 3, the seat brackets 41 and 42 of the present embodiment includes the two outer seat brackets 42 and the one middle seat bracket 41. The outer seat brackets 42 may be attached to upper surface parts of the outer parts of the floor cross member 20 in the vehicle width direction. The middle seat bracket 41 is disposed on the rear side relative to the extension part 23 on the right side at the middle part of the floor cross member 20 in the vehicle width direction. The middle seat bracket 41 is disposed covering the tilted upper surface part 25c positioned on the right side from above. The middle seat bracket 41 is joined to the central upper surface part 25a and the outer upper surface part 25b. A lower part of the middle seat bracket 41 on the front side is joined to a wall surface of the front wall part 21 of the floor cross member 20. Although not illustrated, a lower part of the middle seat bracket 41 on the rear side may be joined to the rear wall part 26. The middle seat bracket 41 is disposed alongside the extension part 23 on the right side in the vehicle front-rear direction.

With disposition as described above, a load from the middle seat bracket 41 can be received by the extension part 23. Accordingly, deformation of the floor part can be reduced. Furthermore, the middle seat bracket 41 positioned on the front side relative to the rear seat 52 (an attachment part on the front side relative to the rear seat 52) is reinforced so that deformation of a seat attachment part at a rear part of the rear seat 52 can be reduced, and as a result, a stress acting on the floor part can be reduced.

Description of the present embodiment is an example for describing the present invention and does not limit the invention as claimed in the claims. Furthermore, components and configurations of the present invention are not limited to the above-described embodiment, but may be modified in various manners within the technical scope of the claims.

For example, the tilted part 16 is provided at the rear floor panel 10 in the present embodiment, but the present invention is not limited thereto. For example, the tilted part 16 may be provided at a floor panel integrally formed of the rear floor panel 10 and the front floor panel 50.

### [Reference Signs List]

- 10: rear floor panel
- 12: front planar part (planar part)
- 12a: upper surface
- 12b: lower surface
- 13: front tunneling part
- 13a: front top part
- 13b: front sidewall part
- 16: tilted part
- 16a: upper surface
- 16b: lower surface
- 17: tilted tunneling part
- 17a: tilted top part
- 17b: tilted sidewall part
- 18: rear planar part
- 20: floor cross member
- 20a: inner reinforcement
- 21: front wall part
- 21a: recessed part
- 22: front flange part
- 23: extension part
- 23a: inner part
- 23b: middle part
- 23c: outer part
- 25a: central upper surface part
- 25b: outer upper surface part
- 25c: tilted upper surface part
- 26: rear wall part
- 27: rear flange part
- 30: underfloor reinforcement
- 31: body part
- 32: front protrusion part
- 32a: inner part
- 32b: middle part
- 32c: outer part
- 41: middle seat bracket
- 42: outer seat bracket
- 45: rear side member
- 47: side sill
- 50: front floor panel
- 52: rear seat
- 52a: seat rail
- 53: cushion part
- 55: battery pack

## Claims

1. A vehicle body lower structure of an electric vehicle in which a battery pack is disposed on a lower surface side of a floor panel and the floor panel is provided with a step across which a rear part is positioned higher than a front part, the vehicle body lower structure of the electric vehicle **characterized in that**:
the floor panel includes a planar part and a tilted part that is tilted to a vehicle upper side while extending from a rear end of the planar part toward a vehicle rear side;
a cross member extending in a vehicle width direction is disposed at a front part of the tilted part on an upper surface side of the floor panel;
an underfloor reinforcement is disposed at the front part of the tilted part on a lower surface side of the floor panel;
a front end of the underfloor reinforcement is disposed on a vehicle front side relative to a front end of the tilted part, and a rear end of the underfloor reinforcement is disposed at the tilted part; and
the underfloor reinforcement and the cross member are joined to the floor panel with the floor panel sandwiched between the underfloor reinforcement and the cross member.

2. The vehicle body lower structure of the electric vehicle according to claim 1, wherein the cross member includes an extension part extending toward the vehicle front side from a front end of a vehicle width direction middle part of the cross member,
the underfloor reinforcement extends in a vehicle width direction, and
at least part of the extension part and at least part of the underfloor reinforcement are disposed overlapping in a vehicle up-down direction.

3. The vehicle body lower structure of the electric vehicle according to claim 1 or 2, wherein a front end of the underfloor reinforcement is disposed on the vehicle front side relative to a front end of the extension part of the cross member.

4. The vehicle body lower structure of the electric vehicle according to claim 1 or 2, wherein
a tunneling part bulging on the vehicle upper side and extending in a vehicle front-rear direction is provided at a vehicle width direction middle part of the floor panel,
the tunneling part includes a top part positioned higher than a principal surface of the floor panel, and a sidewall part extending from the principal surface toward the top part, and
the sidewall part is covered from above by the extension part and from below by the underfloor reinforcement and sandwiched between the extension part and the underfloor reinforcement.

5. The vehicle body lower structure of the electric vehicle according to claim 1 or 2, wherein
a seat bracket supporting a front part of a vehicle seat is attached to the cross member, and
the seat bracket is disposed alongside the extension part in a vehicle front-rear direction.
